# EUROPÄISCHE PATENTSCHRIFT

(11) **EP 1 739 374 B1**
(45) Veröffentlichungstag und Bekanntmachung des Hinweises auf die Patenterteilung: **18.05.2011**
(21) Anmeldenummer: 06013595.1
(22) Anmeldetag: 30.06.2006
(51) Int. Cl.: F27D 9/00, C21C 5/52

(54) **Wandelement für einen metallurgischen Ofen**
Wall element for a metallurgical furnace
Elément de paroi de four méttallurgique

(30) Priorität: 01.07.2005 DE 10530767; 22.07.2005 DE 10534309
(43) Veröffentlichungstag der Anmeldung: 03.01.2007
(73) Patentinhaber: SMS Siemag AG, 40237 Düsseldorf (DE)
(72) Erfinder: Nörthemann, Ralf, 45549 Sprockhövel (DE)
(74) Vertreter: Klüppel, Walter

(56) Entgegenhaltungen:
- EP-A- 0 964 065
- EP-A- 1 170 385
- EP-A- 1 553 192
- US-A- 5 332 199
- US-A1- 2002 001 332
- US-A1- 2003 000 338
- US-A1- 2004 213 318

## Beschreibung

Die Erfindung betrifft ein Wandelement für einen metallurgischen Ofen, insbesondere einen Lichtbogenofen, bestehend aus einem unteren Bereich und einem oberem Bereich, in dessen unteren Bereich mindestens ein Injektor zum Injizieren von Gas wie z.B. Sauerstoff oder Feststoffen angeordnet ist.

Wandelemente mit derartigen Injektoren sind beispielsweise aus der US 2004 / 0213318 A1, der WO 01 /60 123A1 und der WO 03 / 034791 A1 bekannt.

Beim Einsatz von derartigen Injektoren in den Wandelementen eines Lichtbogenofens kommt es zu Reflektionen über den im Lichtbogenofen liegenden Schrott, zurück auf die Wandelemente. Diese werden vom Injektionsstrahl zerstört. Dabei kommt es zu Wasserleckagen, die im schlimmsten Fall eine Explosion / eine Verpuffung im Lichtbogenofen hervorrufen können. Je nach Stärke der Explosion / der Verpuffung kann eine größere Beschädigung des Anlage und / oder eine Personengefährdung hervorgerufen werden.

Die Schrift US 2002/0001332 A1 offenbart ein einteiliges Wandelement eines metallurgischen Ofens, welches aus einem unteren Bereich mit vertikalen und einem oberen Bereich mit horizontalen Kühlrohren besteht. Im unteren Bereich ist eine Haltevorrichtung eingefügt, die einen Injektor trägt.

In EP 0 964 065 A1 ist ein in die mit Kühlrohren versehene Wand eines metallurgischen Ofens einsetzbares Modul beschrieben, welches zwei Injektoren trägt, die in einer Montagebox nebeneinander montiert sind und zu ihrem Schutz vor thermischen und mechanischen Beanspruchungen nicht in den Ofenraum ragen.

In vergleichbarer Weise ragen gemäß US 2004/0213318 A1 Injektoren, die von senkrecht angeordneten Kühlflächen eingeschlossen sind, durch Öffnungen der mit Kühlrohren besetzten Wand eines metallurgischen Ofens.

Die Schrift EP 1 553 192 A2 beschreibt ein einteiliges Wandpanel für ein metallurgisches Gefäß. Im Wandpanel enthalten ist eine Injektorbox, welche aus einem Dachteil, einem Bodenteil und Seitenteilen besteht, wobei das Dachteil aus beabstandeten Rohren gebildet ist und wobei Injektoren im Bodenteil der Injektorbox angeordnet sind.

Aus der Schrift US 5 332 199 ist ein Wandelement eines metallurgischen Ofens zu entnehmen, das im Wesentlichen aus einer Anzahl von horizontal übereinander liegenden Kühlrohren gebildet ist und bei dem die durch die Kühlrohre geführten Injektoren zusätzlich durch Kühlrohre eingeschlossen sind.

Der Erfindung liegt die Aufgabe zugrunde, die bekannten Wandelemente zu verbessern, insbesondere die Standfestigkeit, und die oben genannten Nachteile zu vermeiden.

Diese Aufgabe wird erfindungsgemäß dadurch gelöst, dass das Wandelement gemäß dem Oberbegriff von Anspruch 1 aus zwei Teilen, dem oberen Bereich, bestehend aus beabstandeten Rohren, und dem unteren Bereich, der als massives Element ausgebildet ist und in dem der Injektor angeordnet ist, besteht.

Eine zweiteilige Ausführung ermöglicht einen Austausch des jeweils beschädigten oder verschlissenen Teiles unabhängig von dem jeweils anderen Teil. Dies ist insbesondere dann von Vorteil, wenn der untere Teil durch ein massives Kupferelement (gegossen oder gewalzt) gebildet wird, welches Bohrungen für eine Wasserkühlung aufweist und der obere Teil aus Rohren gefertigt ist.

Weitere Ausgestaltungen des Wandelementes ergeben sich aus den diesbezüglichen Unteransprüchen.

Der entscheidende Vorteil des erfindungsgemäßen Wandelementes liegt darin, dass der aus beabstandeten Rohren bestehende obere Bereich keine plane, geschlossene sondern eine offene, unregelmäßige Oberfläche aufweist, auf die der Injektionsstrahl auftrifft und beispielsweise teilweise abgelenkt wird.

Gemäß einer Weiterentwicklung wird der obere Bereich als auskragendes Element gebildet, der den oder die im unteren Bereich angeordneten Injektoren vor herabfallendem Schrott schützt.

In einer ersten Ausführung besteht der oberer Bereich aus Stahlrohren, die vorzugsweise durch Wasser gekühlt werden. In einer anderen Ausführung besteht der obere Bereich aus Kupferrohren.

Von oben gesehen bildet der obere Bereich, als auskragendes Element ausgebildet, ein Rechteck oder ein Dreieck oder ein Trapez, wobei die in den Lichtbogenofen kragenden Seitenkanten des Dreiecks gerade oder konvex oder konkav ausgebildet sind. Durch derartige Ausgestaltungen kann die Stabilität des auskragenden Elementes, den Anforderungen entsprechend, beeinflusst werden.

Die Ausdehnung des auskragenden Elementes in den Innenraum des Lichtbogenofens hängt ab von der Form und der Größe der Injektoren.

An der Außenseite des Wandelementes (dem Ofeninneren zugewandt) befinden sich im unteren Teil Einfräsungen, damit hier die Ofenschlacke als zusätzlicher Schutz des Injektors / der Injektoren besser haften kann.

Auf Grund der sehr massiven Bauweise des unteren Bereichs kann dieses bei einer Reflektion dem auftreffenden Injektionsstrahl länger standhalten, ohne dass direkt eine Leckage verursacht wird.

Somit wird sowohl die Betriebssicherheit als auch der Personenschutz verbessert.

Ein Ausführungsbeispiel der Erfindung wird anhand von sehr schematischen Zeichnungen näher beschrieben. Es zeigen:
Fig. 1 in Vorderansicht ein erfindungsgemäßes Wandelement,
Fig. 2 in Seitenansicht das Wandelement aus Fig.1,
Fig. 3 in Draufsicht ein Wandelement mit auskragendem Element und
Fig. 4 das Wandelement aus Fig. 1 ohne Einfräsungen.

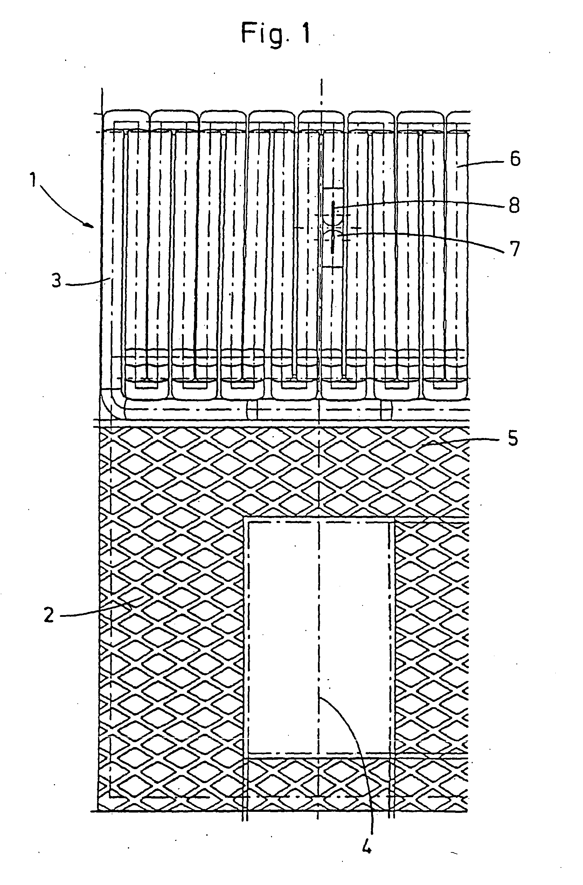

In Figur 1 ist ein Wandelement 1 dargestellt, bestehend aus einem unteren Bereich 2 und einem oberen Bereich 3. Im unteren Bereich 2 ist eine Aussparung zur Aufnahme eines Injektors 4 vorgesehen. Zum besseren Anhaften von Ofenschlacke und zur Vergrößerung der Oberfläche sind in dem unteren Bereich 2 Einfräsungen 5 angebracht.

Der obere Bereich 3 besteht aus Rohren 6 und weist einen Zulauf 7 und einen Ablauf 8 für Kühlwasser auf.

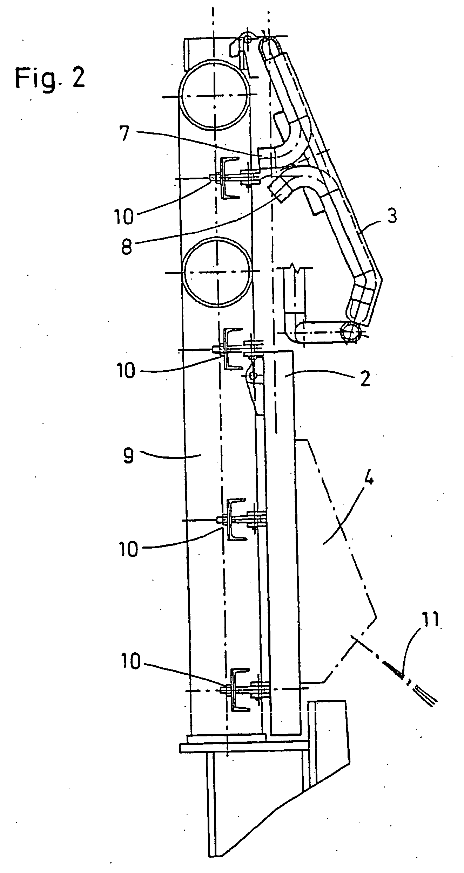

In Figur 2 ist eine Ofenwand 9 eines Lichtbogenofens zu sehen. An die Ofenwand 9 ist das zweiteilige Wandelement 1, bestehend aus unterem Bereich 2 und oberem Bereich 3 mittels Befestigungen 10 angebracht. Durch den Injektor 4 wird z.B. ein Sauerstoffstrahl 11 auf die Oberfläche des flüssigen Stahles (nicht dargestellt) geleitet.

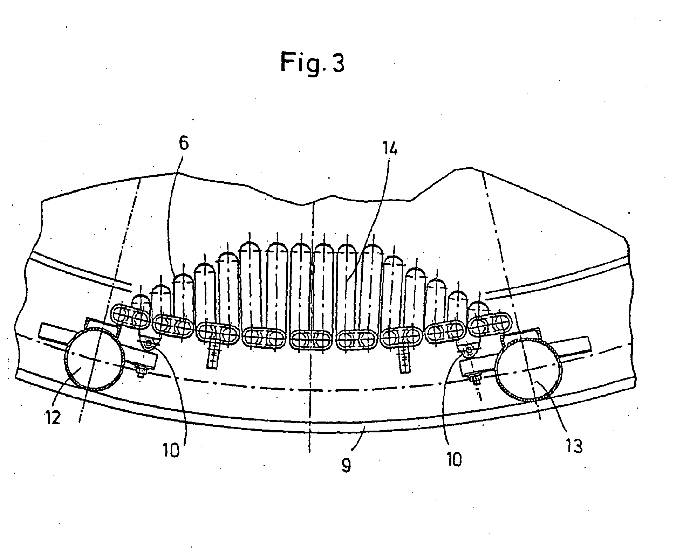

Figur 3 zeigt den oberen Bereich 3 des Wandelementes 1 mit den Rohren 6, die ein auskragendes Element 14 bilden. Die Rohre 6 werden durch eine Rohrleitung 12 mit Kühlwasser versorgt. Eine Rohrleitung 13 leitet des Kühlwasser weiter zu einem weiteren Wandelement. Das auskragende Element 14 weist in dieser Figur eine trapezförmige Form auf.

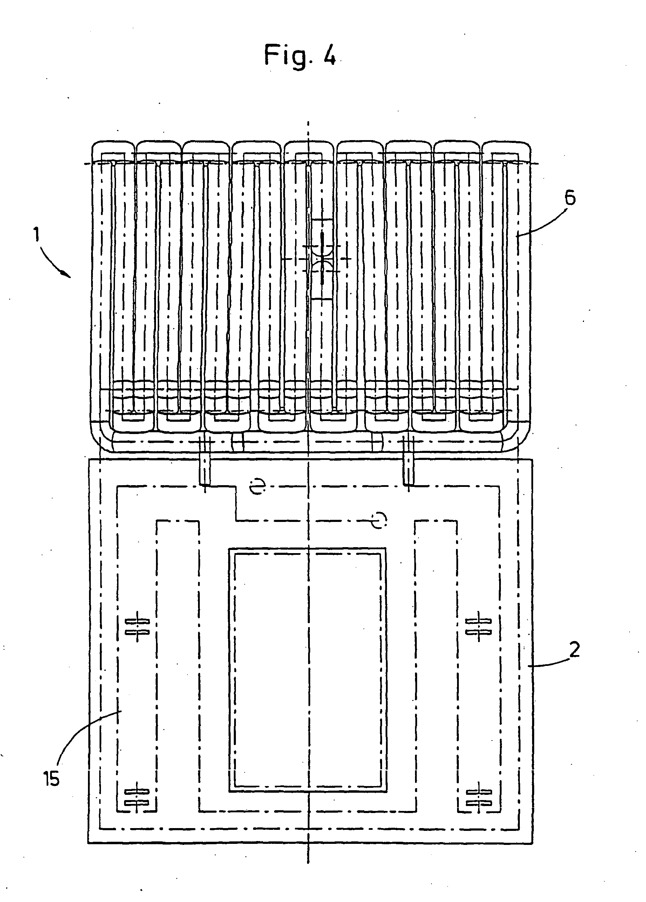

In Figur 4 ist das Wandelement 1 aus Figur 1 ohne die Einfräsungen 5 dargestellt. In dem unteren Bereich 2, der beispielsweise aus massivem Kupfer besteht, sind Bohrungen 15 für Kühlwasser vorgesehen.

### Bezugszeichenliste

- 1.: Wandelement
- 2.: unterer Bereich
- 3.: oberer Bereich
- 4.: Injektor
- 5.: Einfräsungen
- 6.: Rohre
- 7.: Zulauf
- 8.: Ablauf
- 9.: Ofenwand
- 10.: Befestigung
- 11.: Injektionsstrahl
- 12.: Rohrleitung
- 13.: Rohrleitung
- 14.: auskragendes Element
- 15.: Bohrungen

## Patentansprüche

1. Wandelement (1) für einen metallurgischen Ofen, insbesondere einen Lichtbogenofen, in dem mindestens ein Injektor (4) zum Injizieren von Gas, wie z.B. Sauerstoff oder Feststoffen, angeordnet ist,
**dadurch gekennzeichnet,**
**dass** es zweiteilig ausgebildet ist,
**dass** es aus einem unteren Bereich (2) und einem oberen Bereich (3) besteht,
**dass** der untere Bereich (2) als massives Element ausgebildet ist,
**dass** der obere Bereich (3) aus beabstandeten Rohren (6) gebildet ist, dass der Injektor im unteren Bereich angeordnet ist und
**dass** die die beiden Bereiche bildenden Teile des Wandelements voneinander trennbar gestaltet sind.

2. Wandelement nach Anspruch 1,
**dadurch gekennzeichnet,**
**dass** der obere Bereich (3) als auskragendes Element (14) ausgebildet ist

3. Wandelement nach Anspruch 1 oder 2,
**dadurch gekennzeichnet,**
**dass** der obere Bereich (3) aus wassergekühlten Stahlrohren gebildet ist.

4. Wandelement nach Anspruch 1 oder 2,
**dadurch gekennzeichnet,**
**dass** der obere Bereich (3) aus wassergekühlten Kupferrohren gebildet ist.

5. Wandelement nach Anspruch 2, 3 oder 4,
**dadurch gekennzeichnet,**
**dass** das auskragende Element (14) in Draufsicht eine rechteckige oder eine dreieckige oder eine trapezförmige Form aufweist.

6. Wandelement nach Anspruch 5,
**dadurch gekennzeichnet,**
**dass** die Kanten des auskragenden Elementes (14) gerade, konvex oder konkav ausgebildet sind.

7. Wandelement nach einem der Ansprüche 1 bis 6,
**dadurch gekennzeichnet,**
**dass** der untere Teil (2) mit Einfräsungen (5) ausgebildet ist.

8. Wandelement nach einem der Ansprüche 1 bis 7,
**dadurch gekennzeichnet,**
**dass** der untere Teil (2) aus Kupfer ausgebildet ist.

9. Wandelement nach einem der Ansprüche 1 bis 7,
**dadurch gekennzeichnet,**
**dass** der untere Teil (2) aus Stahl ausgebildet ist.

## Claims

1. Wall element (1) for a metallurgical furnace, particularly an electric arc furnace, in which at least one injector (4) for injection of gas, such as for example oxygen, or solids, is arranged, **characterised in that** it is of two-part construction, it consists of a lower region (2) and an upper region (3), the lower region (2) is constructed as a solid element, the upper region (3) is formed from spaced-apart tubes (6), the injector is arranged in the lower region and the parts, which form the two regions, of the wall element are designed to be separable from one another.

2. Wall element according to claim 1, **characterised in that** the upper region (2) is constructed as a protruding element (14).

3. Wall element according to claim 1 or 2, **characterised in that** the upper region (3) is formed from water-cooled steel tubes.

4. Wall element according to claim 1 or 2, **characterised in that** the upper region (3) is formed from water-cooled copper tubes.

5. Wall element according to claim 2, 3 or 4, **characterised in that** the protruding element (14) has in plan view a rectangular, triangular or trapezium-shaped form.

6. Wall element according to claim 5, **characterised in that** the edges of the protruding element (14) are of straight, convex or concave construction.

7. Wall element according to any one of claims 1 to 6, **characterised in that** the lower part (2) is provided with milled-in areas (5).

8. Wall element according to any one of claims 1 to 7, **characterised in that** the lower part (2) is constructed from copper.

9. Wall element according to any one of claims 1 to 7, **characterised in that** the lower part (2) is constructed from steel.

## Revendications

1. Élément de paroi (1) pour un four métallurgique, en particulier pour un four à arc électrique, dans lequel est agencé au moins un injecteur (4) pour injecter du gaz, comme par exemple de l'oxygène, ou des matières solides,
**caractérisé en ce que**
- il est réalisé en deux pièces,
- il est constitué d'une région inférieure (2) et d'une région supérieure (3),
- la région inférieure (2) est réalisée comme un élément massif,
- la région supérieure (3) est constituée par des tubes écartés (6),
- l'injecteur est agencé dans la région inférieure, et
- les deux pièces de l'élément de paroi formant les deux régions sont conçues séparables l'une de l'autre.

2. Élément de paroi selon la revendication 1,
**caractérisé en ce que** la région supérieure (3) est réalisée comme un élément en porte-à-faux (14).

3. Élément de paroi selon la revendication 1 ou 2,
**caractérisé en ce que** la région supérieure (3) est formée par des tubes d'acier refroidis à l'eau.

4. Élément de paroi selon la revendication 1 ou 2,
**caractérisé en ce que** la région supérieure (3) est formée par des tubes de cuivre refroidis à l'eau.

5. Élément de paroi selon la revendication 2, 3 ou 4,
**caractérisé en ce que** l'élément en porte-à-faux (14) présente en vue de dessus une forme rectangulaire ou une forme triangulaire ou une forme trapézoïdale.

6. Élément de paroi selon la revendication 5,
**caractérisé en ce que** les arêtes de l'élément en porte-à-faux (14) sont réalisés droites, convexes ou concaves.

7. Élément de paroi selon l'une des revendications 1 à 6,
**caractérisé en ce que** la partie inférieure (2) est réalisée avec des fraisages (5).

8. Élément de paroi selon l'une des revendications 1 à 7,
**caractérisé en ce que** la partie inférieure (2) est réalisée en cuivre.

9. Élément de paroi selon l'une des revendications 1 à 7,
**caractérisé en ce que** la partie inférieure (2) est réalisée en acier.
